# EUROPÄISCHE PATENTSCHRIFT

(11) **EP 3 631 294 B1**
(45) Veröffentlichungstag und Bekanntmachung des Hinweises auf die Patenterteilung: **21.04.2021**
(21) Anmeldenummer: 18728838.6
(22) Anmeldetag: 28.05.2018
(51) Int. Cl.: F23D 1/04, F23G 7/10, B65G 33/34

(54) **BRENNER UND VERFAHREN ZUM VERBRENNEN VON BRENNGUT IN FORM EINES HOLZZERKLEINERUNGSPRODUKTS, INSBESONDERE VON FEINGUT**
BURNER AND METHOD FOR THE COMBUSTION OF MATERIAL FOR COMBUSTION IN THE FORM OF A COMMINUTED WOOD PRODUCT, IN PARTICULAR OF FINE MATERIAL
PROCÉDÉ ET BRÛLEUR SERVANT À L'INCINÉRATION D'UN PRODUIT À INCINÉRER SOUS LA FORME D'UN PRODUIT DE CONCASSAGE DU BOIS, EN PARTICULIER D'UN PRODUIT FIN

(30) Priorität: 29.05.2017 EP 17173281
(43) Veröffentlichungstag der Anmeldung: 08.04.2020
(73) Patentinhaber: Swiss Krono TEC AG, 6004 Luzern (CH)
(72) Erfinder: LEMKE, Hartmut, 16845 Kantow (DE)
(74) Vertreter: Gramm, Lins & Partner Patent- und Rechtsanwälte PartGmbB
(86) Internationale Anmeldenummer: PCT/EP2018/063943
(87) Internationale Veröffentlichungsnummer: WO 2018/219871

(56) Entgegenhaltungen:
- EP-A1- 1 331 443
- EP-A2- 2 657 598
- FR-A1- 2 727 744

## Beschreibung

Die Erfindung betrifft eine Dampfkesselanlage und ein Verfahren zum Verbrennen von Feingut.

Feingut bezeichnet Holzpartikel, die einen kleinen Durchmesser von beispielsweise höchstens 3 mm haben, wobei die Länge der Partikel des Feinguts in der Regel kürzer ist als 40 mm. Derartiges Feingut fällt beispielsweise in Sägewerken und bei der Produktion von Holzwerkstoffplatten an. Da bei der Produktion von Holzwerkstoffplatten zudem Prozesswärme benötigt wird, werden Reststoffe, so auch das Feingut, in der Regel verbrannt.

Die Verbrennung von Feingut stellt sich dabei als problematisch dar. Aufgrund der geringen Partikelgröße wird das Feingut in der Feuerung vom Luftstrom leicht mitgerissen und verlässt daher schnell den Feuerungsraum. Die Zeit im Feuerungsraum reicht in der Regel nicht aus, um das Feingut zu entzünden, da es häufig einen hohen Wassergehalt hat. Das führt dazu, dass die Verbrennung zu einem großen Teil hinter dem Feuerungsraum und insbesondere in der nachgeschalteten Rauchgasreinigungsanlage stattfindet. Das führt einerseits dazu, dass die bei der Verbrennung entstehende Wärme nicht zur Dampferzeugung genutzt werden kann und andererseits die Rauchgasreinigung erschwert wird.

Aus der FR 2 727 744 A1 ist ein Feingutbrenner bekannt, bei dem das verbrennende Feingut mittels einer Schnecke in einen Brennbereich gebracht und dort mit Verbrennungsluft gemischt wird. Nachteilig an einem solchen System ist die Gefahr von Ascheanhaftungen.

Aus der EP 1 331 443 A1 ist eine Vorrichtung zum Einbringen von Sekundärbrennstoffen in eine Verbrennungsanlage bekannt, bei der ein Schneckenförderer, der einen Verdichtungsbereich aufweist, als Schleuse verwendet wird, der Austritt von Rauchgasen oder Feuer aus dem Feuerraum durch die Brennstoffzuführung verhindert. Ein solcher Brenner ist für Feingut schlecht geeignet.

Aus der DE 10 2007 017101 A1 ist ein Feststoffbrenner bekannt, bei dem zu verbrennendes Material in einem Drehrohr verbrannt wird. Ein derartiger Brenner ist für Feingut nur schlecht geeignet, da es aufgrund der hohen Gasgeschwindigkeiten in einem Verbrennungskessel leicht mitgerissen wird.

Die EP 2 657 598 A2 beschreibt einen Brenner für festes Brenngut wie Sägemehl. Der Brenner besitzt eine Brenngutzuführung zum Zuführen des Brennguts, (ii) einen Schneckenförderer zum Fördern des Brennguts, (iii) einen Verbrennungsbereich, wobei der Schneckenförderer zum Fördern des Brennguts von der Brenngutzuführung zum Verbrennungsbereich angeordnet ist, (iv) eine Luftzuführung zum Zuführen von Luft zum Verbrennungsbereich und (v) eine Brennermündung zum Abführen von Verbrennungsgasen aus dem Verbrennungsbereich.

Der Erfindung liegt die Aufgabe zugrunde, die Verbrennung von Holzzerkleinerungsprodukten, insbesondere von Feingut, zu verbessern.

Die Erfindung löst das Problem durch eine Dampfkesselanlage mit den Merkmalen von Anspruch 1. Die Erfindung löst das Problem zudem durch eine Verwendung dieser Dampfkesselanlage zum Verbrennen von Feingut und ein Verfahren mit den Merkmalen von Anspruch 10.
Gemäß einer bevorzugten Ausführungsform sind eine Förderschnecke des Schneckenförderers und der Stopfbereich zum Komprimieren des Brennguts im Stopfbereich ausgebildet sind. Alternativ oder zusätzlich hat der der Brenner einen in Materialflussrichtung hinter dem Stopfbereich ausgebildeten Vergasungsbereich zum Vergasen des Feinguts.

Insbesondere ist die Luftzuführung so ausgebildet, dass sie keine Luft in den Schneckenförderer abgibt. Insbesondere gibt die Luftzuführung Luft nur in den Verbrennungsbereich ab.

Vorteilhaft an der Erfindung ist, dass das Feingut im Verbrennungsbereich verbrannt wird und damit zumindest zum weit überwiegenden Teil innerhalb des Brenners. In anderen Worten verlassen nur die Verbrennungsgase den Brenner, nicht aber unverbrannte Partikel des Feinguts. Das führt einerseits dazu, dass die Verbrennungswärme des Feinguts genutzt werden kann und andererseits, dass die Rauchgasreinigung erleichtert wird.

Im Rahmen der vorliegenden Beschreibung wird unter einem Holzzerkleinerungsgut beispielsweise jedes Material verstanden, das durch Zerkleinern von Holz entstanden ist, insbesondere durch spanende Bearbeitung. Unter Feingut wird insbesondere ein Holzzerkleinerungsprodukt verstanden, bei dem 90 Gewichtsprozent der Partikel einen Hüllzylinderdurchmesser von höchstens 4 mm, insbesondere höchstens 2 mm, haben. Unter dem Hüllzylinder wird derjenige gedachte Zylinder minimalen Volumens verstanden, der das entsprechende Partikel vollständig umgibt. Vorzugsweise ist eine Länge des Hüllzylinders für zumindest 90 Gewichtsprozent der Partikel des Feinguts höchstens 35 mm lang, insbesondere höchstens 25 mm. Alternativ oder zusätzlich haben zumindest 90 Gewichtsprozent der Partikel, aus denen das Feingut besteht, einen aerodynamischen Durchmesser von höchstens 5 mm.

Bei dem Schneckenförderer handelt es sich um einen geschlossenen Schneckenförderer, der eine Förderstrecke aufweist, die in einem Zylinder läuft. Vorzugsweise ist der Schneckenförderer ein Ein-Schneckenförderer, das heißt, dass lediglich eine Förderschnecke vorhanden ist. Es ist allerdings auch möglich, dass der Schneckenförderer beispielsweise ein Zwei-Schneckenförderer ist. Die Förderschnecken können in diesem Fall gleichförmig oder gegenläufig drehend ausgebildet sein.

Unter dem Verbrennungsbereich wird insbesondere ein Abschnitt des Brenners verstanden, in dem eine Oxidation von Holz, genauer: von Holzgas, das beim Verschwelen von Holz entsteht, stattfindet. Der Verbrennungsbereich bildet mit dem Zylinder, in dem die zumindest eine Förderschnecke des Schneckenförderers läuft, einen gemeinsamen Raum und liegt vorzugsweise in dessen Verlängerung. Vorzugsweise ist eine Querschnittsfläche des Verbrennungsbereichs höchstens 20 % größer als eine Querschnittsfläche des Zylinders. Besonders günstig ist es, wenn die Querschnittsfläche des Verbrennungsbereichs höchstens der Querschnittsfläche des Zylinders entspricht.

Gemäß einer bevorzugten Ausführungsform hat der Brenner einen Stopfbereich, der in Materialflussrichtung des Brennguts hinter der Brenngutzuführung und vor dem Verbrennungsbereich ausgebildet ist, wobei eine Förderschnecke des Schneckenförderers und der Stopfbereich zum Komprimieren des Brennguts im Stopfbereich ausgebildet sind. In anderen Worten ist der Schneckenförderer so angeordnet, dass das von ihm geförderte Brenngut zunächst den Stopfbereich passiert und danach durch nachgedrücktes Brenngut in den Verbrennungsbereich gedrückt wird. Im Stopfbereich werden die Partikel des Brennguts komprimiert. In anderen Worten wird Luft ausgetrieben.

Der Stopfbereich ist so ausgebildet, dass dort keine Verbrennung und auch keine Verschwelung des Brennguts stattfinden. Es ist allerdings möglich und bevorzugt, dass der Brenner so angeordnet ist, dass eine Temperatur im Stopfbereich so hoch ist, dass im Brenngut vorhandenes Wasser verdampft.

Vorzugsweise hat der Stopfbereich einen sich in Materialflussrichtung verjüngenden, insbesondere monoton verjüngenden, Querschnitt. Das führt zu einer Verdichtung des Brennguts im Stopfbereich.

Alternativ oder zusätzlich hat die Förderschnecke im Stopfbereich eine sich verringernde Steigung. In diesem Fall ist der Stopfbereich ein Teil des Förderbereichs, in dem die Förderschnecke angeordnet ist. Es ist in diesem Fall möglich, nicht aber notwendig, dass der Stopfbereich zusätzlich einen sich verjüngenden Querschnitt hat. Es ist möglich, das die Förderschnecke in ihrem in Materialflussrichtung hinteren Bereich eine sich verringernde Steigung hat, sodass das Brenngut komprimiert wird und/oder dass sich der Zylinder, in dem die Förderschnecke läuft, in seinem Querschnitt in Materialflussrichtung verjüngt und/oder dass sich hinter der Förderschnecke ein Bereich anschließt, in dem die Querschnittsfläche sich zumindest abschnittsweise verringert. Es hat sich herausgestellt, dass es günstig sein kann, das Feingut im Stopfbereich nur wenig zu komprimieren.

Der Schneckenförderer weist vorzugsweise einen Elektroantrieb auf, der ausgebildet ist zum automatischen Konstant-Halten eines an der Förderschnecke anliegenden Drehmoments. Beispielsweise umfasst der Elektroantrieb einen Elektromotor und eine Ansteuereinheit, die einen Frequenzrichter aufweist und ausgebildet ist zum Ansteuern des Elektromotors mit elektrischem Strom einer solchen Frequenz, die zu einem konstanten an der Förderschnecke anliegenden Drehmoment führt. Insbesondere handelt es sich bei dem Elektromotor dann um einen Asynchronmotor, bei dem das Drehmoment mittels des Schlupfs eingestellt werden kann.

Vorzugsweise weist die Brenngutzuführung eine Füll-Überwachungseinheit auf, wobei die Ansteuereinheit ausgebildet ist zum Ansteuern des Elektromotors, sodass der Schneckenförderer stets mit Brenngut gefüllt ist. Damit die Verbrennung des Brennguts ausschließlich im Verbrennungsbereich stattfindet und nicht entgegen der Materialflussrichtung in die Brenngutzuführung durchschlägt, ist es günstig, wenn der Brenner im Bereich der Förderschnecke stets vollständig gefüllt ist. Auf diese Weise ist der Sauerstoffgehalt im Brenngut so gering, dass eine Verbrennung vermieden wird.

Der Brenner ragt zumindest mit seinem Verbrennungsbereich in den Feuerungsraum einer Dampfkesselanlage hinein. Das hat den Vorteil, dass die Verbrennungswärme im Feuerungsraum zum Verdampfen von Wasser im Brenngut im Verbrennungsbereich und/oder im Stopfbereich führt. Ein Gehäuse des Brenners sollte im Bereich des Verbrennungsbereichs und/oder des Stopfbereichs aus warmfesten Edelstahl bestehen.

Der Brenner ragt mit seinem Stopfbereich in den Feuerungsraum hinein. Um auch Brenngut, das kein Feingut ist, einfach verbrennen zu können, weist die Dampfkesselanlage vorzugsweise einen Feuerungsrost, insbesondere einen Wanderrost, auf. Die Verbrennung von Brenngut, das gröber ist als das Feingut, stellt insbesondere die Wärme zur Verfügung, die dazu führt, dass Wasser im Feingut verdampft, sodass das getrocknete Feingut im Verbrennungsbereich mit einer hohen Temperatur verbrennt.

Erfindungsgemäß ist zudem eine Holzwerkstoffplatten-Herstellanlage mit einer Holzzerkleinerungsanlage, die im Betrieb ein Holzzerkleinerungsprodukt erzeugt, einer Klassiervorrichtung zum Abtrennen von Feingut aus dem Holzzerkleinerungsprodukt, sodass zumindest eine Fraktion an Grobgut verbleibt, einer erfindungsgemäßen Dampfkesselanlage, deren Brenner zum Beschicken mit Feingut mit der Klassiervorrichtung verbunden ist und deren Feuerungsrost zum Beschicken mit Grobgut mit der Klassiervorrichtung verbunden ist. Es ist möglich, nicht aber notwendig, dass das gesamte Grobgut verbrannt wird. Insbesondere ist es auch möglich, dass ein Teil des Grobguts zum Herstellen von Holzwerkstoffplatten verwendet wird. Dazu weist die Holzwerkstoffplatten-Herstellanlage vorzugsweise entsprechende Maschinen auf, beispielsweise eine Presse und/oder eine Holzzerfaserungsvorrichtung.

Bei der Verwendung der Dampfkesselanlage wird in dem Brenner vorzugweise Feingut verbrannt, das eine Holzfeuchte von zumindest 50 Prozent und höchstens 120 Prozent aufweist.

Die Temperatur im Feuerungsraum beträgt vorzugsweise zumindest 850 C°, was zu einem hohen thermischen Wirkungsgrad führt.

Im Rahmen des Verfahrens wird das Brenngut zunächst im Stopfbereich mittels des Schneckenförderers zusammengedrückt. Danach wird im Brenngut vorhandenes Wasser verdampft. Dies erfolgt insbesondere aufgrund der Umgebungstemperatur im Feuerungsraum und des resultierenden Wärmestroms aus dem Feuerungsraum in den Stopfbereich. Danach vergast das Brenngut, sodass Holzgas entsteht. Das Holzgas wird danach durch Zuführen von Luft in dem Verbrennungsbereich verbrannt. Die heißen Rauchgase verlassen den Brenner durch die Brennermündung.

Im Folgenden wird die Erfindung anhand der beigefügten Zeichnungen näher erläutert. Dabei zeigt
- Figur 1: eine schematische Ansicht einer Holzwerkstoffplatten-Herstellanlage mit einem isometrischen Querschnitt durch einen Brenner, der Teil einer erfindungsgemäßen Dampfkesselanlage ist, und
- Figur 2: mit den Teilfiguren 2a, 2b und 2c weitere Ansichten des Brenners gemäß Figur 1.

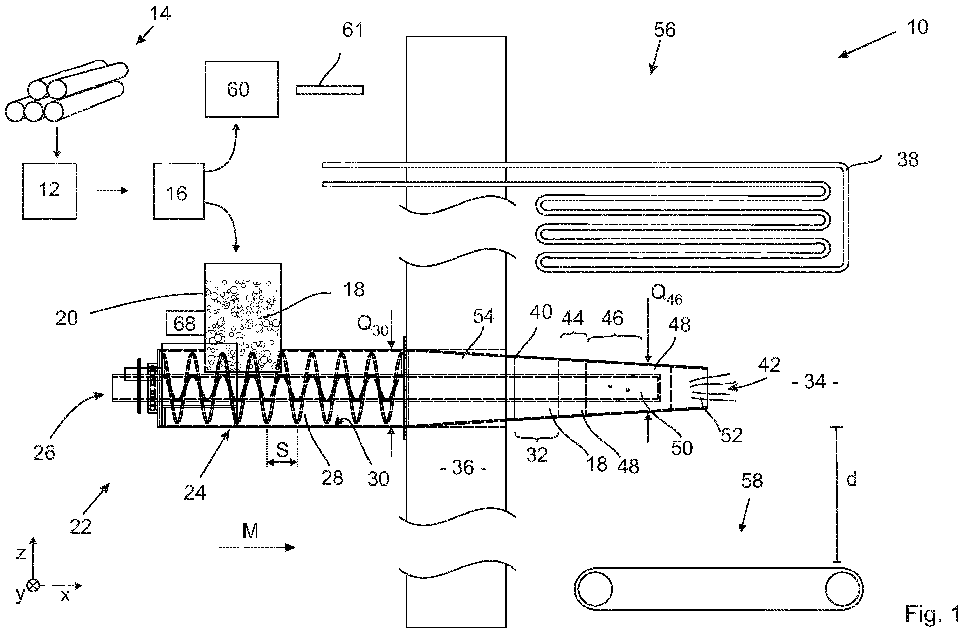

Figur 1 zeigt eine Holzwerkstoffplatten-Herstellanlage 10 mit einer Holzzerkleinerungsanlage 12 zum Zerkleinern von Holz 14. Die Holzzerkleinerungsanlage 12 kann beispielsweise einen Hacker oder eine Säge umfassen und stellt ein Holzzerkleinerungsprodukt her, das im vorliegenden Fall einer optional vorhandenen Klassiervorrichtung 16, beispielsweise in Form eines Windsichters, zugeführt wird. Auf diese Weise wird Feingut 18 abgetrennt und eine Brenngutzuführung 20, die im vorliegenden Fall durch einen Brennstoffschacht gebildet ist, zugeführt.

Die Brenngutzuführung 20 ist Teil eines Brenners 22, der zudem einen Schneckenförderer 24 und eine Luftzuführung 26 umfasst. Der Schneckenförderer 24 umfasst eine Förderschnecke 28, die in einem Zylinder 30 gelagert ist. Beim Betrieb der Förderschnecke 28 wird das Feingut 18 in einer Materialflussrichtung M auf einen Stopfbereich 32 zu gefördert.

Der Stopfbereich 32 befindet sich in einem Feuerungsraum 34, in dem beim Betrieb der Anlage eine Temperatur T₃₄ von zumindest T₃₄ = 850 C° herrschen. Der Feuerungsraum 34 ist von einer Wand 36 begrenzt und beinhaltet einen Dampfkessel 38, der im vorliegenden Fall durch hochdruck- und temperaturfeste Rohre gebildet ist.

Im Stopfbereich 32 erhöht sich eine Dichte des Feinguts 18. Dadurch wird im Feingut 18 enthaltene Luft in und entgegen der Materialflussrichtung M verdrängt. Zudem wird das Feingut 18 erhitzt, da sich Wärme aus dem Feuerungsraum 34 durch ein Gehäuse 40 bis zum Feingut 18 im Stopfbereich 32 ausbreitet. Der entstehende Wasserdampf verlässt den Brenner 22 durch eine Brennermündung 42. Die Brennermündung 42 ist oberhalb einer Oberkante des Feuerungsrosts 58 angeordnet. Beispielsweise beträgt ein Abstand d zwischen Brennermündung 42 und Oberkante des Feuerrosts 58 zumindest 3 m und höchstens 15 m.

In Materialflussrichtung M hinter dem Stopfbereich 32 besitzt der Brenner 22 einen Vergasungsbereich 44, in dem das Feingut 18 vergast wird. Dabei entsteht Holzgas, das in einen Verbrennungsbereich 46 strömt. Im Verbrennungsbereich wird mittels der Luftzuführung 26 Luft zugeführt, sodass Holzgas 48 und Luft 50 miteinander reagieren. In anderen Worten verbrennt das Holzgas und es bilden sich Verbrennungsgase 52, die durch die Brennermündung 42 austreten und den Dampfkessel 38 heizen.

Figur 1 zeigt, dass sich die Brenngutzuführung 20 sowie die Förderschnecke 28 außerhalb des Feuerungsraums 34 befinden, was eine bevorzugte Ausführungsform darstellt. Hingegen ragt der Brenner 22 so weit in den Feuerungsraum 34 hinein, dass der Stopfbereich, der Vergasungsbereich 44 sowie der Verbrennungsbereich 46 im Feuerungsraum 34 angeordnet sind.

Die Förderschnecke 28 hat im vorliegenden Fall eine konstante Steigung. Hinter dem Zylinder 30, der im vorliegenden Fall zylinderförmig ausgebildet ist, schließt sich direkt ein Reaktionsraum 54 an, in dem der Stopfbereich 32, der Vergasungsbereich 44 sowie der Verbrennungsbereich 46 ausgebildet sind. Im Reaktionsraum 54 verringert sich der Innenquerschnitt in Materialflussrichtung M. Dadurch kommt es zur Komprimierung des Feinguts 18, die oben beschrieben worden ist.

Figur 1 zeigt schematisch, dass der Dampfkessel 38, die Wand 36 sowie der Brenner 22 Teil einer Dampfkesselanlage 56 sind, die zudem einen Feuerungsrost 58 umfasst. Dieser wird mit Holzzerkleinerungsprodukten beschickt, die nicht Feingut sind. In anderen Worten wird mittels des Feuerungsrosts 58 grobes Material verbrannt, bei dem die Probleme beim Verbrennen, die mit Feingut 18 existieren, nicht bestehen.

Figur 1 zeigt schematisch, dass in Materialflussrichtung hinter der Klassiervorrichtung 18 eine Herstelleinheit 60 zum Herstellen von Holzwerkstoffplatten 61 aus Holzzerkleinerungsprodukten zu sehen ist, die aus der Holzzerkleinerungsanlage 12 stammen. Die Herstelleinheit 60 kann beispielsweise eine Holzzerfaserungsvorrichtung sowie eine Doppelbandpresse aufweisen. Diese wird beispielsweise mit Thermoöl geheizt, das in der Dampfkesselanlage erhitzt wurde. Solche Herstelleinheiten 60 gehören zum Stand der Technik und werden daher nicht weiter beschrieben.

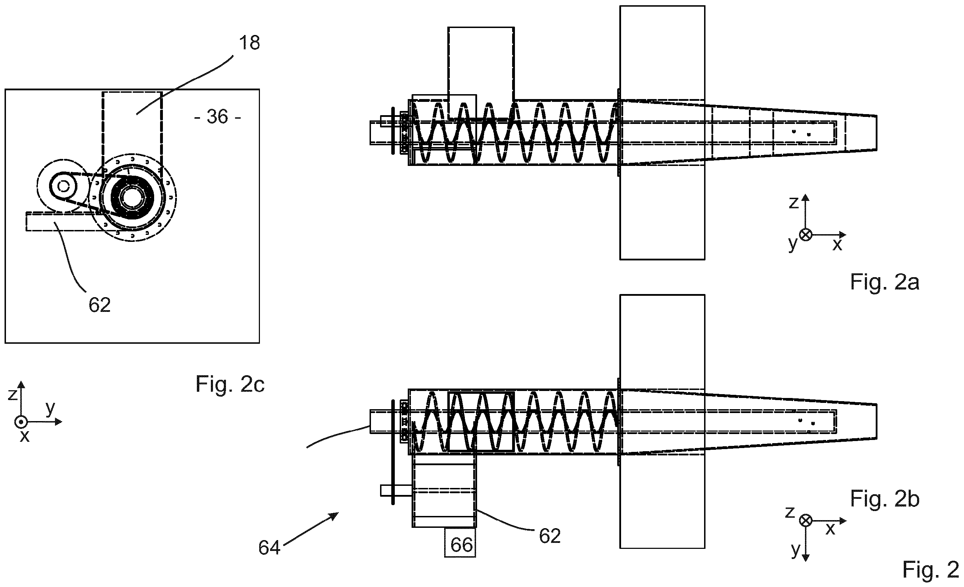

Figur 2a zeigt den Brenner gemäß Figur 1. Figur 2b zeigt eine Ansicht von unten, in der ein Elektromotor 62 zum Antreiben der Förderschnecke 28, im vorliegenden Fall mittels einer Antriebskette, angeordnet ist. Der Elektromotor 62 ist Teil eines Elektroantriebs 64, der zudem eine Ansteuerung 66 aufweist, die einen Frequenzumrichter besitzt und die den Elektromotor 62 mit elektrischem Strom einer veränderbaren Frequenz f versorgt. Der Elektromotor 62 ist ein Asynchronmotor, dessen Drehzahl *ω* und Drehmoment M anhand der Frequenz f geregelt werden kann. Im vorliegenden Fall wird das Drehmoment M auf einen Soll-Drehmoment M_{Soll} geregelt.

Im Betrieb fördert die Förderschnecke 28 das Feingut 18 in Materialflussrichtung M auf den Feuerraum 34 zu. Durch den konisch zulaufenden Reaktionsraum 54 verstopft das Feingut 18 im Stopfbereich 32. Die genaue Lage des Stopfbereichs 32 relativ zur Förderschnecke 28 kann mittels des Soll-Drehmoments M_{Soll} eingestellt werden. Je höher das Soll-Drehmoment M_{Soll} und damit das tatsächlich an der Förderschnecke 28 anliegende Drehmoment M, desto weiter verschiebt sich der Verstopfungspunkt in Richtung der Brennermündung 42.

Im Stopfbereich 32 verbleibt das Feingut 18 so lange, bis die Wärme der Umgebung die Feuchtigkeit aus dem Feingut 18 verdampft hat. Durch die weitere Wärmezuführung beginnt das Feingut 18 im Vergasungsbereich 44 zu vergasen. Das verringert das Volumen des Feinguts 18, sodass dieses sich weiter in Materialflussrichtung vorwärts bewegt. Dadurch sinkt das Drehmoment M, das die Förderschnecke aufwenden muss. Die Förderschnecke dreht sich dadurch erneut und fördert weiteres Feingut 18 in Materialflussrichtung. Eine Nenn-Förderleistung des Schneckenförderers 24 beträgt zumindest 2 Tonnen Brenngut pro Stunde, vorzugsweise zumindest 3 Tonnen Brenngut pro Stunde.

Es sei darauf hingewiesen, dass in der vorliegenden Beschreibung überwiegend Bezug auf Feingut genommen wurde. Es kann aber auch möglich sein, mittels des Brenners 22 Brenngut in Form von Holzzerkleinerungsprodukten zu verbrennen, das gröber ist als Feingut.

Figur 1 zeigt, dass der Brenner 22 eine Füll-Überwachungseinrichtung 68 aufweist, die den Füllstand des Brennguts 18 in der Brenngutzuführung misst. Beispielsweise hat die Füll-Überwachungseinrichtung 68 eine Lichtschranke oder einen Ultraschallsensor oder einen sonstigen Sensor zum Messen des Füllstands.

Wird ein vorgegebener kritischer Füllstand unterschritten, der so gewählt ist, dass beim Unterschreiten dieses Füllstands nicht mehr sichergestellt ist, dass der Zylinder 30 stets mit Brenngut 18 gefüllt ist, so gibt die Füll-Überwachungseinrichtung 68 ein Signal an die Ansteuerung 66 ab, sodass diese eine Drehfrequenz n des Elektromotors 62, gegebenenfalls auf null, reduziert. Wird der kritische Füllstand überschritten, regelt die Ansteuerung 66 den Elektromotor wieder auf das Soll-Drehmoment Msoll.

**Bezugszeichenliste**

| | | | |
|---|---|---|---|
| 10 | Holzwerkstoffplatten-Herstellanlage | 60 | Herstelleinheit |
| | | 61 | Holzwerkstoffplatten |
| 12 | Holzzerkleinerungsanlage | 62 | Elektromotor |
| 14 | Holz | 64 | Elektroantrieb |
| 16 | Klassiervorrichtung | 66 | Ansteuerung |
| 18 | Brenngut/Feingut | 68 | Füll-Überwachungseinrichtung |
| 20 | Brenngutzuführung | d | Abstand |
| 22 | Brenner | *ω* | Drehzahl |
| 24 | Schneckenförderer | f | Frequenz |
| 26 | Luftzuführung | M | Materialflussrichtung |
| 28 | Förderschnecke | M | Drehmoment |
| 30 | Zylinder | M_{Soll} | Soll-Drehmoment |
| 32 | Stopfbereich | n | Drehfrequenz |
| 34 | Feuerungsraum | Q | Querschnitt |
| 36 | Wand | S | Steigung |
| 38 | Dampfkessel | T34 | Temperatur |
| 40 | Gehäuse | | |
| 42 | Brennermündung | | |
| 44 | Vergasungsbereich | | |
| 46 | Verbrennungsbereich | | |
| 48 | Holzgas | | |
| 50 | Luft | | |
| 52 | Verbrennungsgase | | |
| 54 | Reaktionsraum | | |
| 56 | Dampfkesselanlage | | |
| 58 | Feuerungsrost | | |

## Patentansprüche

1. Dampfkesselanlage (56) mit
(a) einem Dampfkessel (38),
(b) einer Wand (36), die einen Feuerungsraum (34) umgibt,
(c) einem Brenner (22) zum Verbrennen von Brenngut (18) in Form eines Holzzerkleinerungsprodukts, mit
(i) einer Brenngutzuführung (20) zum Zuführen des Brennguts (18),
(ii) einem Schneckenförderer (24) zum Fördern des Brennguts (18),
(iii) einem Verbrennungsbereich (46), wobei der Schneckenförderer (24) zum Fördern des Brennguts (18) von der Brenngutzuführung (20) zum Verbrennungsbereich (46) angeordnet ist,
(iv) einer Luftzuführung (26) zum Zuführen von Luft (50) zum Verbrennungsbereich (46) und
(v) einer Brennermündung (42) zum Abführen von Verbrennungsgasen (52) aus dem Verbrennungsbereich (46),
(d) wobei der Brenner einen Stopfbereich (32) hat, der in Materialflussrichtung (M) des Brennguts (18) hinter der Brenngutzuführung (20) und vor dem Verbrennungsbereich (46) ausgebildet ist,
(e) die Brenngutzuführung (20) außerhalb des Feuerungsraums (34) angeordnet ist und dass
(f) der Brenner (22) mit seinem Stopfbereich (32) in den Feuerungsraum (34) ragt.

2. Dampfkesselanlage nach Anspruch 1, **dadurch gekennzeichnet, dass**
- eine Förderschnecke (28) des Schneckenförderers (24) und der Stopfbereich (32) zum Komprimieren des Brennguts (18) im Stopfbereich (32) ausgebildet sind, und
- der Brenner einen in Materialflussrichtung (M) hinter dem Stopfbereich (32) ausgebildeten Vergasungsbereich (44) zum Vergasen des Feinguts (18) hat.

3. Dampfkesselanlage nach Anspruch 1 oder 2, **dadurch gekennzeichnet, dass** der Stopfbereich (32) einen sich in Materialflussrichtung (M) verjüngenden Querschnitt (Q),hat.

4. Dampfkesselanlage nach einem der vorstehenden Ansprüche, **dadurch gekennzeichnet, dass** die Förderschnecke (28) im Stopfbereich (32) eine sich verringernde Steigung (S) hat.

5. Dampfkesselanlage nach einem der vorstehenden Ansprüche, **dadurch gekennzeichnet, dass** der Schneckenförderer (24) einen Elektroantrieb (64) aufweist, der ausgebildet ist zum automatischen Konstant-Halten eines an der Förderschnecke (28) anliegenden Drehmoments (M).

6. Dampfkesselanlage nach Anspruch 5, **dadurch gekennzeichnet, dass** der Elektroantrieb (64)
- einen Elektromotor (62) und
- eine Ansteuereinheit (66) umfasst, die einen Frequenzumrichter aufweist und ausgebildet ist zum Konstant-Halten eines an der Förderschnecke (28) anliegenden Drehmoments (M).

7. Dampfkesselanlage nach Anspruch 6, **dadurch gekennzeichnet, dass** die Brenngutzuführung (20) eine Füllüberwachungseinrichtung aufweist,
wobei die Ansteuereinheit (66) ausgebildet ist zum Ansteuern des Elektromotors (62), sodass der Schneckenförderer (24) stets mit Brenngut (18) gefüllt ist.

8. Holzwerkstoffplatten-Herstellanlage (10) mit
- einer Holzzerkleinerungsanlage, die im Betrieb ein Holzzerkleinerungsprodukt erzeugt,
- einer Klassiervorrichtung (16) zum Abtrennen von Feingut (18) aus dem Holzzerkleinerungsprodukt, sodass Grobgut verbleibt,
- einer Dampfkesselanlage (56) nach einem der vorstehenden Ansprüche,
- wobei der Brenner (22) zum Beschicken mit Feingut (18) mit der Klassiervorrichtung (16) verbunden ist und ein Feuerungsrost (58) zum Beschicken mit Grobgut mit der Klassiervorrichtung (16) verbunden ist.

9. Verwendung der Dampfkesselanlage (56) nach einem der Ansprüche 1 bis 7 zum Verbrennen von Feingut (18).

10. Verfahren zum Verbrennen von Feingut (18) mit der Dampfkesselanlage (56) nach einem der Ansprüche 1 bis 7 wobei
- das Feingut mit der Brenngutzuführung (20) zugeführt wird und danach mit dem Schneckenförderer (24) von der Brenngutzuführung zum Verbrennungsbereich (46) gefördert wird, und
- dem Verbrennungsbereich Luft zugeführt wird, und
- mittels der Brennermündung (42) Verbrennungsabgase aus dem Verbrennungsbereich abgeführt werden.

11. Verfahren nach Anspruch 10, mit den Schritten:
(i) Zusammendrücken des Brennguts (18) im Stopfbereich (32) mittels des Schneckenförderers (24),
(ii) Verdampfen-Lassen von im Brenngut (18) vorhandenem Wasser,
(iii) Vergasen des Brennguts (18), sodass ein Holzgas (48) entsteht, und
(iv) Verbrennen des Holzgases (48) an der Luft (50), die mittels der Luftzuführung (26) zugeführt wird.

## Claims

1. A steam boiler system (56) with
(a) a steam boiler (38)
(b) a wall (36) which encloses a firing chamber (34),
(c) a burner (22) for burning combustible material (18) in the form of a comminuted wood product, with
(i) a combustible material feed (20) for feeding the combustible material (18),
(ii) a screw conveyor (24) for conveying the combustible material (18),
(iii) a combustion zone (46), wherein the screw conveyor (24) is arranged to convey the combustible material (18) from the combustible material feed (20) to the combustion zone (46),
(iv) an air feed (26) for feeding air (50) into the combustion zone (46) and
(v) a burner mouth (42) for discharging combustion gases (52) out of the combustion zone (46),
(d) the burner having a compacting zone (32) that is arranged behind the combustible material feed (20) and in front of the combustion zone (46) in the direction of material flow (M) of the combustible material (18),
(e) wherein the combustible material feed (20) is arranged outside the firing chamber (34) and that
(f) the burner (22) protrudes into the firing chamber (34) with its compacting zone (32).

2. The steam boiler system according to claim 1, **characterised by** the fact that
- an auger (28) of the screw conveyor (24) and the compacting zone (32) are designed to compress the combustible material (18) in the compacting zone (32) and
- the burner (22) has a gasification zone (44) for gasifying the fine material (18), the gasification zone being arranged behind the compacting zone (32) in the direction of material flow (M).

3. The steam boiler system to claim (c) or -, **characterised by** the fact that the compacting zone (32) features a tapering cross-section (Q) in the direction of material flow (M).

4. The steam boiler system according to one of the above claims, **characterised by** the fact that the auger (28) has a decreasing pitch (S) in the compacting zone (32).

5. The steam boiler system according to one of the above claims, **characterised by** the fact that the screw conveyor (24) features an electric drive (64), which is configured to automatically keep a torque (M) acting on the auger (28) at a constant.

6. The steam boiler system according to claim 5, **characterised by** the fact that the electric drive (64) comprises
- an electric motor (62) and
- a control unit (66), which features a frequency converter and is is configured to automatically keep a torque (M) acting on the auger (28) at a constant.

7. The steam boiler system according to claim 6, **characterised by** the fact that the combustible material feed (20) has a filling monitoring device,
wherein the control unit (66) is designed to control the electric motor (62) in such a way that the screw conveyor (24) is always filled with combustible material (18).

8. A wood material panel production system (10) with
- a wood comminution system that produces a comminuted wood product during operation,
- a classification device (16) for separating fine material (18) from the comminuted wood material such that coarse material remains,
- a steam boiler system (56) according to one of the above claims,
- wherein the burner (22) is connected to the classification device (16) for the feeding of fine material (18) and the firing grate (58) is connected to the classification device (16) for the feeding of coarse material.

9. A use of a steam boiler system (56) according to one of the claims (c) to 7 for burning fine material (18).

10. A method for burning fine material (18) using the steam boiler system (56) according to one of the claims 1 to 7, wherein
- the fine material is fed by means of the combustible material feed (20) and is then fed from the combustible material feed to the combustion zone (46) by means of the screw conveyor (24), and
- air is fed to the combustion zone and
- combustion gases are discharged from the combustion zone through the burner mouth (42)

11. The method according to claim 10 featuring the steps:
(i) compressing of the combustible material (18) in the compacting zone (32) by means of the screw conveyor (24),
(ii) evaporation of water held in the combustible material (18),
(iii) gasification of the combustible material (18), thereby producing a wood gas (48), and
(iv) burning of the wood gas (48) in the air (50) that is supplied by way of the air feed (26).

## Revendications

1. Installation de chaudière à vapeur (56) comportant
(a) une chaudière à vapeur (38),
(b) une paroi (36) entourant une chambre de combustion (34),
(c) un brûleur (22) pour la combustion de matières combustibles (18) sous forme de produit de déchiquetage de bois, comportant
(i) une alimentation en matières combustibles (20) pour alimenter les matières combustibles (18),
(ii) un convoyeur à vis sans fin (24) pour convoyer les matières combustibles (18),
(iii) une zone de combustion (46), le convoyeur à vis sans fin (24) étant disposé pour convoyer les matières combustibles (18) de l'alimentation en matières combustibles (20) à la zone de combustion (46),
(iv) une alimentation en air (26) pour alimenter en air (50) la zone de combustion (46), et
(v) une embouchure de brûleur (42) pour évacuer des gaz de combustion (52) hors de la zone de combustion (46),
dans laquelle
(d) le brûleur comprend une zone de bourrage (32) qui est réalisée en aval de l'alimentation en matières combustibles (20) et en amont de la zone de combustion (46), dans le sens du flux de matières (M) des matières combustibles (18),
(e) l'alimentation en matières combustibles (20) est disposée à l'extérieur de la chambre de combustion (34), et
(f) le brûleur (22) fait saillie avec sa zone de bourrage (32) dans la chambre de combustion (34).

2. Installation de chaudière à vapeur selon la revendication 1,
**caractérisée en ce que**
- une vis sans fin de convoyage (28) du convoyeur à vis sans fin (24) et la zone de bourrage (32) sont réalisées pour comprimer les matières combustibles (18) dans la zone de bourrage (32), et
- le brûleur comprend une zone de gazéification (44) réalisée en aval de la zone de bourrage (32) dans le sens du flux des matières (M) et destinée à gazéifier les matières fines (18).

3. Installation de chaudière à vapeur selon la revendication 1 ou 2, **caractérisée en ce que** la zone de bourrage (32) présente une section transversale (Q) se rétrécissant dans le sens du flux des matières (M).

4. Installation de chaudière à vapeur selon l'une des revendications précédentes,
**caractérisée en ce que** la vis sans fin de convoyage (28) présente un pas décroissant (S) dans la zone de bourrage (32).

5. Installation de chaudière à vapeur selon l'une des revendications précédentes,
**caractérisée en ce que** le convoyeur à vis sans fin (24) comprend un entraînement électrique (64) réalisé pour automatiquement maintenir constant un couple de rotation (M) appliqué à la vis sans fin de convoyage (28).

6. Installation de chaudière à vapeur selon la revendication 5,
**caractérisée en ce que** l'entraînement électrique (64) comprend
- un moteur électrique (62) et
- une unité de pilotage (66) comprenant un convertisseur de fréquence et réalisée pour maintenir constant un couple de rotation (M) appliqué à la vis sans fin de convoyage (28).

7. Installation de chaudière à vapeur selon la revendication 6,
**caractérisée en ce que** l'alimentation en matières combustibles (20) comprend un dispositif de surveillance du remplissage,
l'unité de pilotage (66) étant réalisée pour piloter le moteur électrique (62) de telle sorte que le convoyeur à vis sans fin (24) soit toujours rempli de matières combustibles (18).

8. Installation de fabrication de panneaux en matériau à base de bois (10), comportant
- une installation de déchiquetage de bois qui, en fonctionnement, fournit un produit de déchiquetage de bois,
- un dispositif de classification (16) permettant de séparer les matières fines (18) du produit de déchiquetage de bois, de sorte qu'il reste des matières grossières,
- une installation de chaudière à vapeur (56) selon l'une des revendications précédentes,
- le brûleur (22) étant relié au dispositif de classification (16) pour charger les matières fines (18), et une grille de combustion (58) étant reliée au dispositif de classification (16) pour charger les matières grossières.

9. Utilisation de l'installation de chaudière à vapeur (56) selon l'une des revendications 1 à 7 pour brûler des matières fines (18).

10. Procédé pour brûler des matières fines (18) au moyen de l'installation de chaudière à vapeur (56) selon l'une des revendications 1 à 7,
dans lequel
- les matières fines sont alimentées au moyen de l'alimentation en matières combustibles (20), puis elles sont convoyées de l'alimentation en matières combustibles à la zone de combustion (46) à l'aide du convoyeur à vis sans fin (24), et
- la zone de combustion est alimentée en air, et
- les gaz de combustion sont évacués hors de la zone de combustion à l'aide de l'embouchure (42) du brûleur.

11. Procédé selon la revendication 10, comprenant les étapes consistant à :
(i) comprimer les matières combustibles (18) dans la zone de bourrage (32) à l'aide du convoyeur à vis sans fin (24),
(ii) faire évaporer l'eau présente dans les matières combustibles (18),
(iii) gazéifier les matières combustibles (18) pour produire un gaz de bois (48), et
(iv) brûler le gaz de bois (48) à l'air (50) alimenté à l'aide de l'alimentation en air (26).
